# EUROPEAN PATENT APPLICATION

(11) **EP 0 968 909 A2**
(43) Date of publication of application: **05.01.2000**
(21) Application number: 99112003.1
(22) Date of filing: 21.06.1999
(51) Int. Cl.: B62M 7/00, B60K 13/02, F02M 35/16

(54) **Motorcycle air intake assembly**

(30) Priority: 30.06.1998 US 91282 P
(71) Applicant: HARLEY-DAVIDSON MOTOR COMPANY, Milwaukee, Wisconsin 53208 (US)
(72) Inventor: Osterberg, Timothy, R., Hubertus, Wisconsin 53033 (US)
(74) Representative: Grünecker, Kinkeldey, Stockmair & Schwanhäusser Anwaltssozietät

(57) **Abstract**

A motorcycle having an air intake housing (18) connected to an internal combustion engine (14). The air intake housing (18) includes an opening (26) and an emission door (66) positioned adjacent the opening (26). The emission door (66) is pivotally mounted over the opening (26) such that when the engine (14) is not running, the emission door (66) is biased by gravity to cover the opening (26), thereby preventing the escape of emissions. When the engine (14) is started, the vacuum created causes the emission door (66) to pivot and uncover the opening (26), thereby allowing air to pass through the opening (26) for use by the engine (14).

## Description

### BACKGROUND OF THE INVENTION

### Technical Field

The present invention relates generally to the field of air intake assemblies for motorcycles. More specifically, the present invention relates to air intake assemblies having an emission door for preventing emission escape while the vehicle is not operating.

### Related Prior Art

Due to the growing concern with air quality and the tighter regulations regarding vehicle emissions, motorcycle air intake assemblies have included an emission door which closes the air intake passage. These emission doors prevent the leakage of emissions, such as gasoline vapor, from inside the engine of a motorcycle while the motorcycle is not in operation.

Typically, the emission door is biased closed over the air intake passage using a spring, and a mechanical actuator, such as a solenoid, is used to open the door against the biasing force of the spring. When the motorcycle engine is off, the spring holds the emission door closed over the air intake passage. When the engine is started, the solenoid is activated and the emission door opens. This opens the air intake passage to allow air to enter into the engine.

### SUMMARY OF THE INVENTION

This method of mechanically biasing the emission door closed using springs and solenoids creates various problems. One problem is in the complexity of the design. Designing a relatively small emission door that must operate in conjunction with a spring and solenoid in the constricted area of the air intake passage is a difficult and expensive task. Once designed, manufacturing and installing this small and complex assembly can be difficult.

Another problem with the above-described system is that it is difficult and expensive to repair or replace should it malfunction. The assembly contains multiple parts that must move and work in conjunction with one another. In the event of a malfunction, these intricate parts are expensive to replace.

Finally, this expensive system is not required in all areas of the country. This means that the emission door is an added option that is not standard to all motorcycles. Therefore, this option raises the overall cost of the motorcycle for those required by law to have it.

To alleviate the above-noted problems, the present invention provides a motorcycle air intake housing with an emission door that is biased closed by gravity. In particular, the invention eliminates the need for a complex mechanical assembly to bias the emission door closed. This translates into lower design, manufacture, and assembly costs. By utilizing gravity, the invention also reduces the likelihood of malfunction that goes along with using a plurality of small movable parts in a constricted area. With these advantages, the emission door option need not be so expensive for those select purchasers who are required by law to have it.

More particularly, the invention provides a motorcycle air intake housing having an air intake passage including an opening. Movably mounted inside the air intake passage is an emission door that is movable between an open position, where the opening of the air intake passage is substantially uncovered, and a closed position, where the opening of the air intake passage is substantially covered. The emission door is biased toward the closed position by gravity. Preferably, a seal is included between the emission door and the opening to provide a substantially air-tight seal when the door is in the closed position. In addition, an air filter can be positioned in the housing to filter the air entering the engine.

In one preferred embodiment, the emission door moves from the closed position to the open position by means of low pressure produced by the operating internal combustion engine. While a solenoid could be used to move the emission door from the closed position to the open position, it is not necessary in this embodiment.

The present invention is also embodied in a method of operating a motorcycle. The method includes the steps of positioning the emission door in a closed position that substantially blocks the air intake passage, biasing the emission door toward the closed position by gravity, starting the engine to lower the pressure in a portion of the housing, and opening the emission door due to the lower pressure. Preferably, the step of positioning includes the step of creating a substantially air-tight seal between the emission door and the opening.

Various other features and advantages of the invention will become apparent to those skilled in the art upon review of the following detailed description, claims, and drawings.

### DESCRIPTION OF THE DRAWINGS

Fig. 1 is a perspective view of a motorcycle equipped with an air intake assembly embodying the present invention.
Fig. 2 is an exploded view of part of the air intake assembly of Fig. 1.
Fig. 3 is an enlarged perspective view of part of the air intake assembly of Fig. 1 with the cover removed.
Fig. 4 is an enlarged partially-sectioned side view of the uncovered air intake assembly.
Fig. 5 is a front view of the uncovered air intake assembly of Fig. 4.
Fig. 6 is an enlarged front view of the emission door.
Fig. 7 is an enlarged back view taken along line 7-7 in Fig. 4.

### DESCRIPTION OF A PREFERRED EMBODIMENT

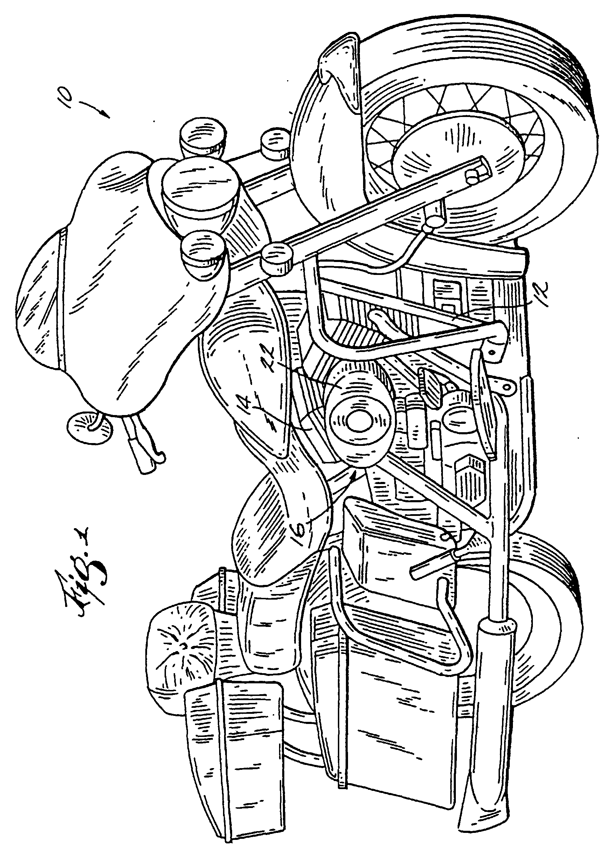

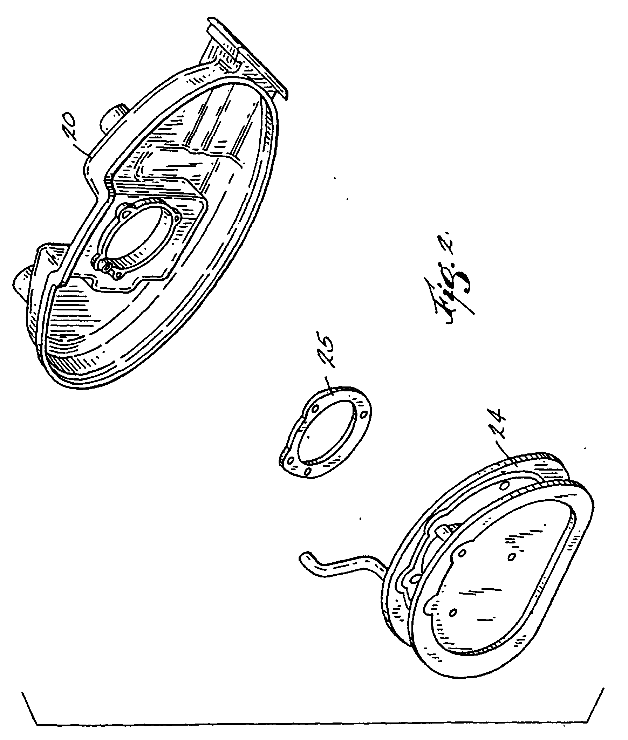

As shown in Figs. 1 and 2, the illustrated motorcycle 10 includes a frame 12, an engine 14 supported by the frame 12, and an air intake assembly 16 connected to the engine 14. The air intake assembly 16 generally includes an air intake housing 18, which includes a base 20 and a cover 22 in the illustrated embodiment. An air filter 24 and gasket 25 are mounted inside the air intake housing 18.

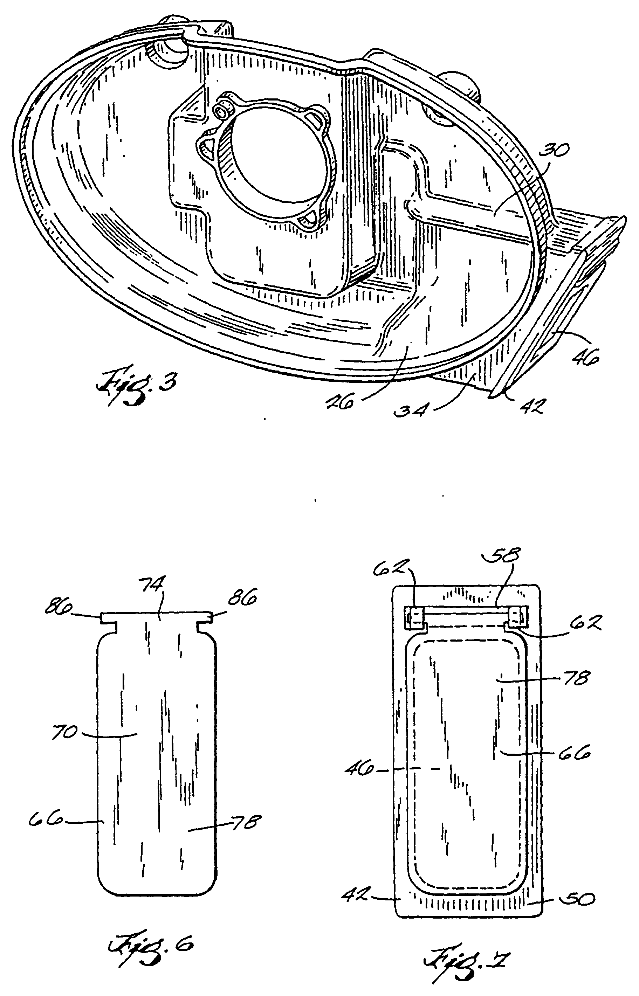

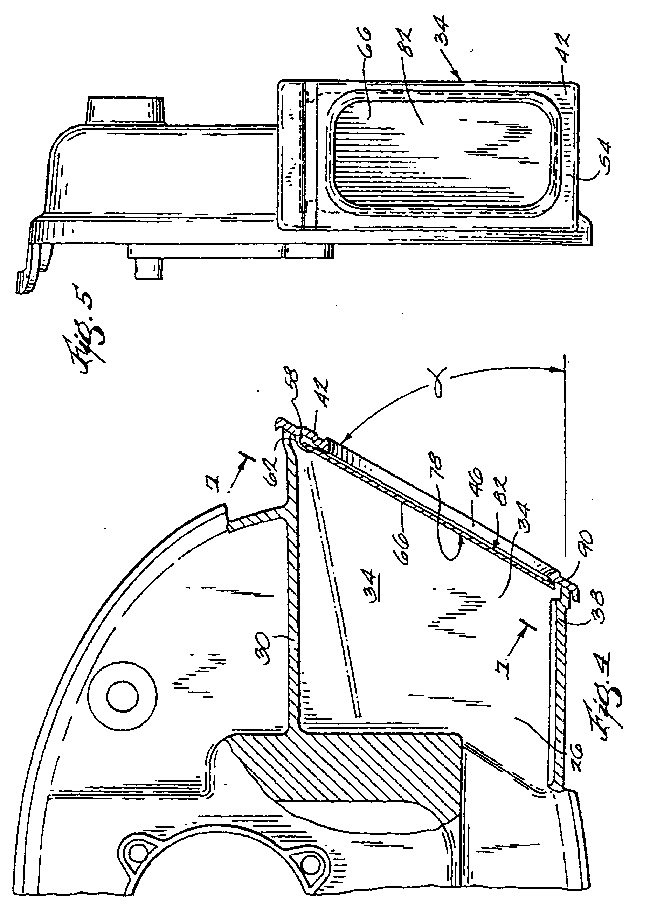

Referring to Figs. 3-6, the air intake housing 18 includes an air intake passage 26 defined by a top wall 30, side walls 34, a bottom wall 38, and a front wall 42. The illustrated front wall 42 is substantially rectangular and extends between the edge of the bottom wall 38 and the edge of the top wall 30 such that it is inclined from horizontal at an angle α of approximately sixty degrees. The front wall 42 includes an opening 46 which is substantially rectangular in shape. The opening 46 allows air to enter into the air intake passage 26 for use by the engine 14.

The front wall 42 has an interior side 50 and an exterior side 54. Above the opening 46 on the interior side 50, the front wall 42 has an elongated rectangular recessed portion 58 which extends parallel to the top edge of the opening 46. Hinge guides 62 are located at both ends of the elongated rectangular recessed portion 58.

An emission door 66 is mounted in the air intake passage 26. The illustrated emission door 66 is a piece of stamped metal having a body portion 70, including an interior surface 78 and an exterior surface 82, and a tab portion 74. The illustrated body portion 70 is substantially rectangular. The tab portion 74 extends from the top of the body portion 70 and includes two laterally extending tabs 86. The two tabs 86 engage the hinge guides 62 such that the emission door 66 is pivotally mounted to the interior side 50 of the front wall 42. While pivotally mounting the emission door 66 to the front wall 42 is the preferred method of mounting, other methods of attachment which yield equivalent results are not excluded.

Due to the inclined nature of the front wall 42, the pivotally mounted emission door 66 is biased by gravity such that the exterior surface 82 of the body portion 70 is in contact with the interior side 50 of the front wall 42. This is the closed position, and occurs when the motorcycle engine is not operating. The illustrated body portion 70 is substantially the same shape as the opening 46, but is larger, such that when in the closed position, the emission door 66 covers the entire opening 46 and contacts the interior side 50 of the front wall 42.

In one embodiment, a seal member 90 made of rubber or another comparable material is positioned between the emission door 66 and the air intake housing 18. When the emission door 66 is in the closed position, the seal member 90 provides a substantially air-tight seal around the opening 46, preventing the escape of emissions from the engine to the atmosphere. The seal member 90 could be mounted to the interior side 50 around the periphery of the opening 46, or could be mounted around the periphery of the exterior surface 82 of the emission door 66 using an adhesive (not shown).

When the engine of the motorcycle is operating, the pressure in the air intake passage 26 is reduced, which creates a pressure differential between the enclosed area of the air intake passage 26 and the atmosphere outside the air intake passage 26. This pressure differential causes a vacuum effect that draws air into the air intake passage 26 through the opening 46. The gravity bias acting on the emission door 66 is overcome such that the emission door 66 pivots upward toward the top wall 30 of the air intake passage 26. This leaves the opening 46 substantially uncovered to allow air to flow into the air intake passage 26 for use by the engine. This is the open position and is represented in Fig. 4 by the dashed lines. A solenoid (not shown) could be used to assist in moving the emission door 66 to the open position, but is not necessary.

When the engine is turned off, the pressure differential is eliminated and the gravity bias acts on the emission door 66 to move it back to the closed position described above.

The foregoing description of the present invention has been presented for the purposes of illustration and description. Furthermore, the description is not intended to limit the invention to the form disclosed herein. Consequently, variations and modifications commensurate with the above teachings, and the skill or knowledge of the relevant art, are within the scope of the present invention. The embodiments described herein are further intended to explain the best modes known for practicing the invention to enable others skilled in the art to utilize the invention in such, or other, embodiments and with various modifications required by the particular applications or uses of the present invention. It is intended that the appended claims be construed to include alternative embodiments to the extent permitted by the prior art.

## Claims

1. A motorcycle comprising:
a frame;
an internal combustion engine connected to said frame;
an air intake housing connected to said internal combustion engine for guiding air to said internal combustion engine, said air intake housing including an opening;
an emission door positioned adjacent said opening and movable from a closed position, where said opening is substantially covered by said door, to an open position, where said opening is substantially uncovered, wherein said emission door is biased toward said closed position by gravity.

2. A motorcycle as claimed in claim 1, further comprising an air filter positioned in said housing.

3. A motorcycle as claimed in claim 1, wherein said emission door is pivotally mounted.

4. A motorcycle as claimed in claim 1, wherein said emission door is movably mounted to said housing.

5. A motorcycle as claimed in claim 1, wherein said emission door is movable from said closed position to said open position by low pressure created by said engine.

6. A motorcycle as claimed in claim 1, further comprising a seal positioned between said door and said housing.

7. A motorcycle as claimed in claim 1, wherein said opening is inclined relative to horizontal.

8. A motorcycle as claimed in claim 6, wherein said opening is inclined between 30° and 80° from horizontal.

9. An air intake assembly for securing to a motorcycle comprising:
an air intake housing including an opening; and
an emission door movable from a closed position, where said opening is substantially covered by said door, to an open position, where said opening is substantially uncovered, wherein said emission door is biased toward said closed position by gravity.

10. An air intake assembly as claimed in claim 9, further comprising an air filter positioned in said housing.

11. An air intake assembly as claimed in claim 9, wherein said emission door is pivotally mounted.

12. An air intake assembly as claimed in claim 9, wherein said emission door is movably mounted to said air intake housing.

13. An air intake assembly as claimed in claim 9, wherein said air intake assembly is mountable on a motorcycle engine, and wherein said emission door is movable from said first position to said second position by vacuum created by the engine.

14. An air intake assembly as claimed in claim 9, further comprising a seal positioned between said door and said housing.

15. An air intake assembly as claimed in claim 9, wherein said opening is inclined relative to horizontal when said assembly is mounted on a motorcycle.

16. An air intake assembly as claimed in claim 15, wherein said opening is inclined between 30° and 80° from horizontal when said assembly is mounted on a motorcycle.

17. A method of operating a motorcycle having an engine, an air intake housing defining an opening, and an emission door, said method comprising the steps of:
positioning the emission door in a closed position that substantially blocks the opening to substantially block escape of emissions from the engine;
biasing the emission door toward the closed position by gravity;
starting the engine to thereby lower the pressure in a portion of the housing; and
opening the emission door due to the lower pressure to thereby allow air to enter the engine through the opening.

18. A method as claimed in claim 17, wherein said positioning step further comprises the step of creating a substantially air-tight seal between said emission door and said opening.

19. A method as claimed in claim 17, wherein said opening step comprises pivoting the emission door.
